# EUROPEAN PATENT APPLICATION

(11) **EP 2 387 169 A1**
(43) Date of publication of application: **16.11.2011**
(21) Application number: 11165940.5
(22) Date of filing: 12.05.2011
(51) Int. Cl.: H04J 3/08, H04L 12/56

(54) **Extra capacity in path-protected communication networks**

(30) Priority: 12.05.2010 US 333780 P
(71) Applicant: Ceragon Networks LTD., 69719 Tel-Aviv (IL)
(72) Inventor: Fefer, Jeffrey, 75241, Rishon-LeZion (IL); Lavia, Ehud, 62309, Tel-Aviv (IL)
(74) Representative: Taylor, Adam David

(57) **Abstract**

A method for managing traffic in a communication network which includes a protected path including a first path and a second path, including refraining from sending redundant data along the second path, and using freed up communication capacity obtained by refraining from sending redundant data along the second path for sending other data along the second path. The above-described method and further comprising measuring path integrity, in which the refraining from sending and the using freed up communication capacity depend, at least partly, on meeting a stability criterion applied to the measured path integrity. A network management unit (505, 665, 675) configured to functionally connect to a communication node (605, 655, 680) configured to provide path protection by sending redundant data along a first path (430) and a second path (475), configured to cause the communication node to refrain from sending redundant data along the second path, and use freed up communication capacity, obtained by causing the communication node to refrain from sending redundant data along the second path, for sending other data along the second path. Related apparatus and methods are also described.

## Description

### FIELD AND BACKGROUND OF THE INVENTION

The present invention, in some embodiments thereof, relates to networks with protected paths between two endpoints in at least part of their topology, and, more particularly, but not exclusively, to networks carrying more than one type of data, and, more particularly, but not exclusively, to networks carrying Plesiochronous Digital Hierarchy (PDH) and Ethernet packets.

The term "protected path" in all its grammatical forms is used throughout the present specification and claims to mean a communication link between two communication nodes, wherein redundant data may be sent along two or more redundant paths between the two nodes.

Traffic carried over redundant paths in networks may include several types of data, such as, by way of a non-limiting example, PDH and Ethernet packets.

Networks with protected paths implemented via different redundant paths along rings provide flexibility in routing traffic as well as backup and/or protection when a link fails.

In telecommunications, Sub-Network Connection Protection, or SNCP, is a type of protection mechanism associated with networks such as, for example, Synchronous Digital Hierarchy (SDH), PDH, and Time Division Multiplexed (TDM) networks.

SNCP is a dedicated (1+1) protection mechanism for circuit-switch network spans which may be deployed in ring, point to point or mesh topologies.

SNCP is complementary to multi-section protection, applied to physical handover interfaces; which offers 1+1 protection of the handover.

An alternative to SNCP is Multi-Section Shared Protection Rings or MS-SPRings, which offers a shared protection mode.

SNCP's functional equivalent in SONET is called UPSR.

SNCP is a per path protection. SNCP follows the principle of Congruent Sending Selective Receive, Signal is sent on both paths but received only where the Signal Strength is best. When the working path for Signal receiving is cut, the receiver detects SD (Signal Degradation) and the receiver of the other path becomes active.

SNCP is a network protection mechanism for providing path protection (end-to-end protection) for SDH networks. A data signal is transmitted via two different paths and can be implemented in a line or ring structures.

SNCP is a 1+1 protection scheme (one working and one protection transport entity). Input traffic is broadcast in two routes (one being the normal working route and the second one being the protection route).

Assume a failure-free state for a path from a node B to a node A. Node B bridges the signal destined to A from other nodes on the ring, both on working and protecting routes. At node A, signals from these two routes are continuously monitored for path layer defects and the better quality signal is selected. Now consider a failure state where fiber between node A and node B is cut. The selector switches traffic on the standby route when the active route between node A and node B is failed.

In order to prevent any unnecessary or spurious protection switching in the presence of bit errors on both paths, a switch will typically occur when the quality of the alternate path exceeds that of the current working path by some threshold (e.g., an order of magnitude better Bit Error Rate (BER). Consecutively, any case of failure drops in SNCP's decision mechanism.

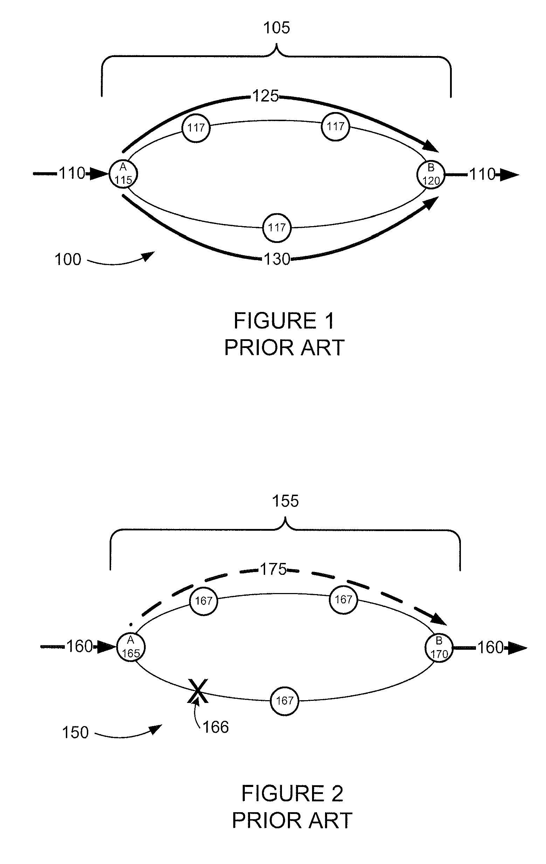

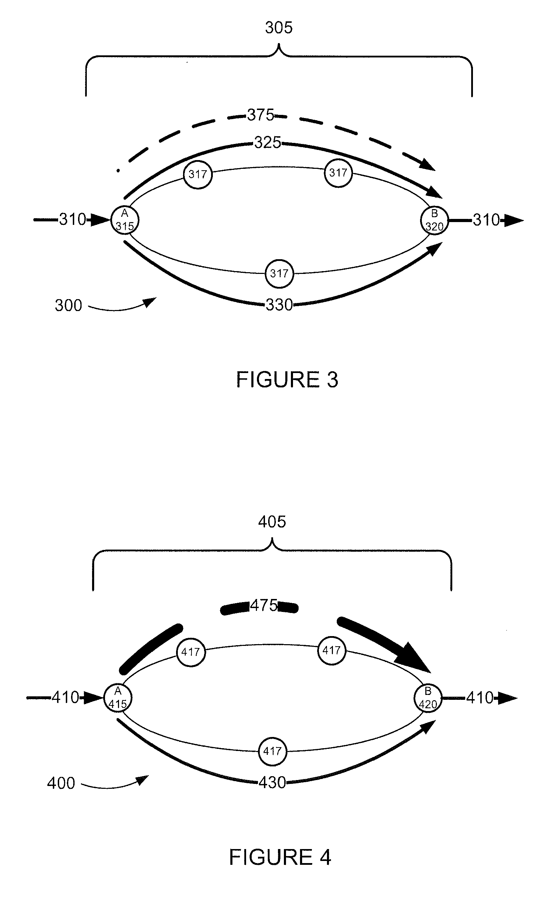

For purposes of better understanding some embodiments of the present invention, as illustrated in Figures 3-6C of the drawings, reference is first made to Figures 1 and 2.

Reference is now made to Figure 1, which is a simplified illustration of PDH traffic in a ring section 100 of a network 105.

Figure 1 is intended to illustrate a case in which redundant data is carried over the ring section 100 of the network 105.

TDM and/or PDH data commonly uses a protection mechanism called SNCP, operation of which is illustrated in Figure 1.

PDH traffic 110 enters the ring section 100 at node A 115, and the PDH traffic 110 exits at node B 120. At node A 115 all of the PDH traffic 110 is sent along all of two (or more) paths 125 130. The PDH traffic 110 reaches node B 120 from 2 (or more) intervening, neighboring nodes 117. The node B 120 selects to receive the PDH traffic 110 from one of the paths 125 130 according to some criterion, and forwards the PDH traffic 110 to its destination. If one of the paths 125 130 fails, the other one of the paths 125 130 serves as a backup.

Reference is now made to Figure 2, which is a simplified illustration of Ethernet traffic in a ring section 150 of a network 155.

Figure 2 is intended to illustrate another case in which data is carried over the ring section 150 of the network 155.

Figure 2 depicts the network 155 carrying Ethernet traffic. The network 155, which includes one or more rings 150, is optionally cut at a point 166 into a tree-shaped network, optionally using the Spanning Tree Protocol (STP).

Ethernet traffic 160 enters the ring section 150 at node A 165, and exits the ring section 150 at node B 170. The Ethernet traffic 160 travels, by way of a non-limiting example, along a first path 175 from node A 165 to node B 170.

Avoiding loops, or rings, in the network is required for proper operation of Ethernet traffic. If the first path 175 fails, the network detects the problem and rebuilds the tree, optionally using another side of the ring 150.

### SUMMARY OF THE INVENTION

In communication networks, some types of data are carried from a first communication node to a second communication node along two paths. In some embodiments of the invention, data which has traditionally been carried, redundantly, along both paths, may be carried along one side, and the freed-up bandwidth may be used for carrying other data, at least while there is no failure in the paths.

In communication networks with path protection, some types of data are carried from a ring ingress node to a ring egress node along both sides of the ring. In some embodiments of the invention, data which has traditionally been carried, redundantly, along both sides may be carried along one side, and the freed-up bandwidth is used for carrying other data.

According to an aspect of some embodiments of the present invention there is provided a method for managing traffic in a communication network which includes a protected path including a first path and a second path, including refraining from sending redundant data along the second path, and using freed up communication capacity obtained by refraining from sending redundant data along the second path for sending other data along the second path.

According to some embodiments of the invention, further comprising measuring path integrity, in which the refraining from sending and the using freed up communication capacity depend, at least partly, on meeting a stability criterion applied to the measured path integrity.

According to some embodiments of the invention, the protected path is protected according to a Sub-Network Connection Protection protocol.

According to some embodiments of the invention, the sending other data includes sending Ethernet data.

According to some embodiments of the invention, the protected path includes a protected Plesiochronous Digital Hierarchy (PDH) protocol data path.

According to some embodiments of the invention, a network management unit maintains a data structure for tracking path integrity of at least the first path and the second path.

According to some embodiments of the invention, tracking the path integrity is performed based, at least in part, on health status indicators sent along a third path set up for communicating path integrity indicators for the first path, and a fourth path set up for communicating path integrity indicators for the second path.

According to some embodiments of the invention, tracking the path integrity is performed based, at least in part, on health status indicators sent along the first path and the second path.

According to some embodiments of the invention, tracking the path integrity is performed based, at least in part, on detecting errors in received data.

According to an aspect of some embodiments of the present invention there is provided a communication node configured to provide path protection by sending redundant data along a first path and a second path including a network management unit configured to refrain from sending redundant data along the second path, and use freed up communication capacity obtained by refraining from sending redundant data along the second path for sending other data along the second path.

According to an aspect of some embodiments of the present invention there is provided a network management unit configured to functionally connect to a communication node configured to provide path protection by sending redundant data along a first path and a second path, configured to cause the communication node to refrain from sending redundant data along the second path, and use freed up communication capacity, obtained by causing the communication node to refrain from sending redundant data along the second path, for sending other data along the second path.

According to an aspect of some embodiments of the present invention there is provided a network management unit configured to functionally connect to a communication node configured to provide path protection by sending redundant data along a first path and a second path, configured to block the communication node from sending redundant data along the second path, and use freed up communication capacity, obtained by blocking the communication node from sending redundant data along the second path, for sending other data along the second path.

According to an aspect of some embodiments of the present invention there is provided apparatus in a communication network including a network management unit which is configured to provide network traffic management using a method as described above.

According to an aspect of some embodiments of the present invention there is provided software for implementing network traffic management according to any method described above.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
Figure 1 is a simplified illustration of PDH traffic in a ring section of a network;
Figure 2 is a simplified illustration of Ethernet traffic in a ring section of a network;
Figure 3 is a simplified illustration of a ring section of a network, configured for carrying both Ethernet and PDH traffic;
Figure 4 is a simplified illustration of a ring section of a network, configured for carrying both Ethernet and PDH traffic, according to an example embodiment of the present invention;
Figure 5 is a simplified block diagram illustration of logical operation of a network management unit in a communication node, operating according to an example embodiment of the invention;
Figure 6A is a simplified block diagram illustration of a communication node, constructed and operating according to an example embodiment of the present invention;
Figure 6B is a simplified block diagram illustration of an adaptation unit connected to, communicating with, and providing at least some network management service to, a communication node, constructed and operating according to an example embodiment of the present invention; and
Figure 6C is a simplified block diagram illustration of an adaptation unit connected to, communicating with, and providing at least some network management service to, a communication node, constructed and operating according to an example embodiment of the present invention.

### DESCRIPTION OF SPECIFIC EMBODIMENTS OF THE INVENTION

The present invention, in some embodiments thereof, relates to networks with rings in at least part of their topology, and, more particularly, but not exclusively, to networks carrying more than one type of data, and, more particularly, but not exclusively, to networks carrying PDH and Ethernet packets.

Before explaining at least one embodiment of the invention in detail, it is to be understood that the invention is not necessarily limited in its application to the details of construction and the arrangement of the components and/or methods set forth in the following description and/or illustrated in the drawings and/or the examples. The invention is capable of other embodiments or of being practiced or carried out in various ways.

Networks nowadays can carry multiple types of data, such as, by way of a non-limiting example, both PDH and Ethernet packets, as illustrated in Figure 3.

In case where a network carries multiple types of data, and in which at least one of the types of data is sent via two paths, for redundancy, some embodiments of the present invention refrain from sending identical data along a second path, and use the freed-up communication bandwidth to send other data along the second path.

The different types of data share a common bandwidth resource, and there is a bandwidth tradeoff between different types of data; the more of one type of data, the less of the other.

For example, in some embodiments, the redundancy is provided by a Sub-Network Connection Protection protocol.

For example, in some embodiments, the identical, redundant data is data sent using a Plesiochronous Digital Hierarchy (PDH) protocol.

For example, in some embodiments, the freed-up communication bandwidth is used to send Ethernet data along the second path.

Communication nodes implementing the above-mentioned method for dropping redundant data and using the freed-up communication bandwidth to send other data typically include software which provides the above-mentioned capability. The software is sometimes termed firmware, that is, the programs and/or data structures which control various electronic devices.

Reference is now made to Figure 3, which is a simplified illustration of a ring section 300 of a network 305, configured for carrying both Ethernet and PDH traffic.

Figure 3 is intended to illustrate a case in which some redundant data is carried over the ring section 300 of the network 305, and some other data is also carried over the ring section 300 of the network 305.

Data 310 enters the ring section 300 at an ingress node A 315, and the data 310 exits at an egress node B 320.

It is noted that the ring section may include additional nodes, termed herein intervening nodes 317, between the ingress node A 315 and the egress node B 320.

At node A 315 all of the PDH traffic is sent along all of two (or more) paths 325 330. The PDH traffic reaches node B 320 from 2 (or more) neighboring, intervening nodes 317. Node B 320 selects to receive the PDH traffic from one of the paths 325 330 according to some criterion, and forwards the PDH traffic to its destination. If one of the paths 325 330 fails, the other one of the paths 325 330 serves as a backup.

Ethernet traffic enters the ring section 300 at node A 315, and exits the ring section 300 at node B 320. The Ethernet traffic travels, by way of a non-limiting example, along a first path 375 from node A 315 to node B 320. If the first path 375 fails, the network detects the problem and rebuilds the tree, optionally using another side of the ring 300.

In a topology such as illustrated in Figure 3, each one of the nodes 315 317 320 may be configured to support a given amount of PDH traffic. Additional bandwidth available at the nodes 315 317 320 may be allotted to Ethernet traffic. When bandwidth is insufficient at a link 315 317 320, Ethernet packets may optionally be dropped. Figure 3 depicts a particular topology, and is meant to illustrate a general case where bandwidth resources may optionally be shared.

The term "primary path" in all its grammatical forms is used throughout the present specification and claims interchangeably with the term "first path" and its corresponding grammatical forms. The term "secondary path" in all its grammatical forms is used throughout the present specification and claims interchangeably with the term "second path" and its corresponding grammatical forms. It is noted that the term primary path is typically used for a path which is being use for reception of redundant data, while the term secondary path is typically used for a path which is being use for transmission of the redundant data, but not for the reception thereof. However, the secondary path may become the primary path upon failure of the primary path, as is well known in the art.

It is noted that the SNCP protocol, which is an example protocol which uses redundant data for protection, and which can be used for carrying the PDH traffic of Figure 3, is a unidirectional protocol. There is no feedback from node B 320 to node A 310. It is noted that a disadvantage of the SNCP protocol is a waste of channel or link bandwidth when there are no failures in the ring. The PDH data is transmitted at least twice, and causes a reduction in an amount of a second type of data, such as Ethernet, which may be carried.

It is noted that in today's technology, most of the time there are no failures in communication paths, although occasionally there are failures, and some form of communication path protection is beneficial.

Embodiments of the present invention optionally make use of technology, to detect of failure, recover from failure, and re-route data, fast enough to minimize down time.

In communication networks with rings, some types of data are carried from a ring ingress node to a ring egress node along both sides of the ring.

In some embodiments of the invention, data which has traditionally been carried, redundantly, along both sides may be carried along one side, and the freed-up bandwidth is used for carrying other data.

Reference is now made to Figure 4, which is a simplified illustration of a ring section 400 of a network 405, configured for carrying both Ethernet and PDH traffic, according to an example embodiment of the present invention.

Figure 4 is intended to illustrate a case in which some traffic, by way of a non-limiting example PDH traffic, which would normally be carried redundantly over two paths through the ring section 400 of the network 405 is now carried, non-redundantly, over a first path 430 through the ring section 400 of the network 405.

Data 410 enters the ring section 400 at an ingress node A 415, and the data 410 exits at an egress node B 420.

It is noted that the ring section may include additional nodes, termed herein intervening nodes 417, between the ingress node A 415 and the egress node B 420.

Figure 4 also illustrates that different types of traffic, by way of a non-limiting example both PDH traffic and Ethernet traffic, is carried over the ring section 400 of the network 405. The Ethernet traffic optionally travels over a second path 475 through the ring section 400 of the network 405.

It is noted that much more Ethernet traffic can now be carried through the second path 475, which does not carry PDH traffic as described in the above example of Figure 3.

The present invention, in some embodiments thereof, drops at least one mechanism of protection, and uses the freed communication resource to send additional data.

The present invention, in some embodiments thereof, drops sending identical data by more than one path, and uses the freed communication resource to send additional data.

The present invention, in some embodiments thereof, lets the Ethernet traffic use the bandwidth which has been dedicated for PDH when the bandwidth dedicated for backup is not required, that is, when the PDH traffic in the backup path of the ring is not used.

The present invention, in some embodiments thereof, optionally drops path protection, for example for the PDH, only after a period of time during which communication has been found to be stable. For example, an error rate over a selected path has remained above a specific limit during a specific time.

It is noted that networks today are sometimes found to be stable for long periods of time, and that maintaining path protection by redundant transmission may be a waste of bandwidth for many use cases.

It is noted that when a failure in the first path 430 is detected, the PDH traffic may be transmitted via both the first path 430 and the second path 475, or only via the second path 475.

Having introduced an example embodiment of the invention, additional embodiments will now be described in more detail.

### Redundant path protocols

Non-limiting example path protection protocols which use typically redundant transmission include: SNCP; Unidirectional Path Switched Ring (UPSR); and Bi-Directional Line Switched Ring (BLSR). Such path protection protocols are candidates for embodiments of the present invention, where path protection may optionally be dropped, freeing up communication capacity for reuse.

### Communication protocols which may use freed communication capacity

It is noted that the example embodiment of the invention as described above with reference to Figure 4 may be extended to dropping any redundant transmission and adding any transmission, both redundant-according-to-previous-practice, and non-redundant. The freed-up bandwidth can be used to transport any other data.

In some embodiments of the invention the freed-up bandwidth can be used to transport even data which, according to current art, requires protection by sending redundant data over different paths. A non-limiting example of such data is TDM data.

In some embodiments of the invention the freed-up bandwidth is used to transport previously-protected-by-redundancy data, by transporting the data over a freed up path, without sending redundant data, similarly to transporting the other data non-redundantly, which was what enabled freeing up a path. Again, a non-limiting example of such data is TDM data.

In some embodiment of the invention, the additional data being transported may be of a lower priority, since upon a path failure, the additional data may be dropped in order to use the one path left for transporting the higher priority data.

Using the above-mentioned methods capacity may be substantially increased, up to doubling capacity, even if TDM-only only data is being used.

In some embodiment of the invention, the additional data being transported may be non-redundant data, such as Ethernet data.

### Allocating freed bandwidth

In some embodiments of the invention, a redundant path for the PDH traffic may optionally be manually turned off, by a network operator, freeing up communication capacity for additional traffic, for example Ethernet, or even additional PDH traffic.

In some embodiments of the invention, a redundant path for the PDH traffic may optionally be automatically turned off, optionally by a network management unit, freeing up communication capacity for additional traffic, for example Ethernet, or even additional PDH traffic.

In some embodiments of the invention, the network management unit is located at the ingress node. In some embodiments of the invention, the network management unit is located at the egress node. In some embodiments of the invention, a network management unit is located both at the ingress node and at the egress node. In some embodiments of the invention, a network management unit is located also at intervening nodes.

In an example embodiment of the invention, one or more of the following actions may be taken to manage a communication network: allocating the freed bandwidth (preferably, but not necessarily, automatically); establishing a feedback channel for monitoring the alternate paths (for example from an egress node B to an ingress node A, and/or monitoring both directions of a path: from the egress node B to the ingress node A and from the ingress node A to the egress node B); and providing a Decision-Making-Logic which enables the communication network to use selected transmission paths, and use freed bandwidth for adding more traffic.

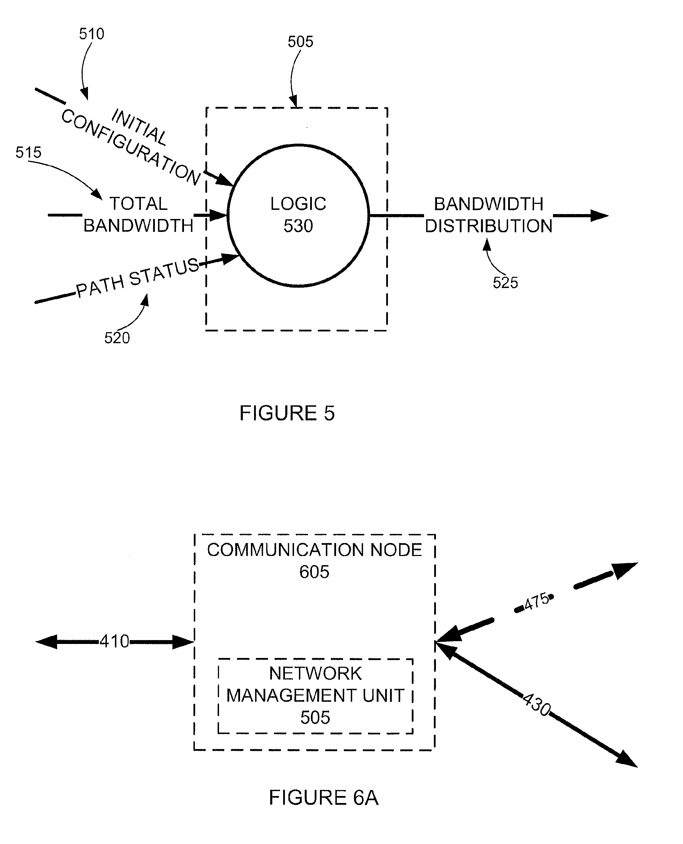

In some embodiments of the invention, optional Automatic Dynamic Allocation implements automatic interchanging of bandwidth dedicated for Ethernet and PDH traffic as a response to the varying signal conditions. For example, a network management unit may optionally override an initial configuration, possibly provided by a user. For example, if an initial user configuration allocated an amount of bandwidth to a PDH signal, e.g., a specific E1 signal, but the E1 signal is not received at a communication node, then the communication node is optionally eligible to dedicate the bandwidth of the E1 signal to Ethernet packets. The Automatic Dynamic Allocation is illustrated below, with reference to Figure 5.

Reference is now made to Figure 5, which is a simplified block diagram illustration of logical operation of a network management unit 505 in a communication node, operating according to an example embodiment of the invention.

The network management unit 505 optionally accepts one or more inputs, including the following three inputs:

Total bandwidth 515 - it is noted that in some networks the total bandwidth may be a constant bandwidth, as for example in wired networks, while in other networks the total bandwidth may change over time, as for example in wireless networks which optionally adapt to changes in the wireless medium.

An initial configuration 510 - which may include setting up a portion of the total bandwidth 515 for one or more protected communication channels, such as PDH channels, and may include setting up a portion of the total bandwidth 515 for one or more unprotected communication channels, such as channels for carrying Ethernet communications. In some embodiments of the invention an initial configuration is entered into the network management unit 505 by a technician, and does not change thereafter, and in those embodiments the initial configuration is not an input, but is rather taken as residing in the network management unit 505 at any time after initial configuration by the technician.

A path status 520 - which optionally includes an indicator whether one or more of the protected paths under management, such as the paths 325 330 of Figure 3 and the first path 430 of Figure 4, are functional. Optionally, status of unprotected paths such as Ethernet communication paths 375 475 is also included in the path status 520 input.

The network management unit 505 includes a logic unit 530, which determines, based on data from one or more of the above-mentioned inputs, an Automatic Dynamic Allocation of bandwidth distribution 525. The logic unit 530 determines where it is possible to refrain from sending identical, redundant, data along a redundant path, and instead sends additional data along the freed up path.

In some embodiments of the invention, the network management unit 505 is optionally installed at the ingress node A 415 and optionally installed at the egress node B 420. The logic unit 530 includes a path protection entity, which determines if and when to send redundant data, and a bandwidth allocation entity, which decides which data to send given the available bandwidth, including freed-up bandwidth, and the amount and kinds of data received.

In some embodiments of the invention, the network management unit 505 is optionally installed at intermediate nodes 417. The logic unit 530 includes a bandwidth allocation entity, which decides which data to send given an available bandwidth and the amount and kinds of data received by and/or passing via the intermediate nodes 417.

Some methods of determining path status, optionally in order to meet at least a threshold stability criterion, are described below.

### Feedback

In some embodiments of the invention a feedback channel is optionally used in order to let the ingress node (for example, node A 415 of Figure 4) know if traffic has been received correctly at the egress node (for example node B 420 of Figure 4).

Feedback may optionally be done by sending a Remote-Defect-Indication (RDI) from the egress node to the ingress node.

In some embodiments of the invention, a Decision-Making-Logic, or rules, is optionally used so that all nodes in the ring agree on the transmission path of the PDH data.

In some embodiments of the invention, the Decision-Making-Logic is located at both the ingress node and the egress node of the ring, and not at intermediate nodes between the ingress node and the egress node.

In some embodiments of the invention, the Decision-Making-Logic is located at only one of the ingress node and the egress node of the ring.

In some embodiments of the invention, a Decision-Making-Logic unit tracks status of both the first and the second paths.

In some embodiments of the invention, a Decision-Making-Logic unit tracks status of only one of the first and the second paths, optionally the path which is being used. In such embodiments, simplicity is gained, possibly at an expense of optimality. Optionally, a preferred path is determined, between the first and the second path, and as long as the preferred path is intact, there is no need to use the second path.

### Additional description of some example embodiments

In a first example embodiment of the invention, an optional feedback channel is used to send path status indications between a local node and a remote node, such as between an ingress node and an egress node or vice versa.

In another embodiment of the first example, the path status indications may be included with other data which is carried between the local node and the remote node.

In yet another embodiment of the first example, path status may be inferred by verifying that other data which is carried between the local node and the remote node is received at an error rate below a defined error rate threshold. Error checking, and/or error rate measurement, may be performed using known error checking methods such as checksum.

In the first example embodiment, a status of each alternative path between the local node and the remote node optionally has one of the following three example values: V, X, or SF.

The term local node is used for a node which accepts data and/or status signals. The local node may be either an ingress node or an egress node of a path. A remote node is a node which sends the data and/or status signals. The remote node may be either an ingress node or an egress node of a path.

In the present description of the first example, the egress node is taken to be the local node, and the ingress node is taken to be the remote node.

In the present example, a value of V means that a signal has been received in the local node and that the remote node indicates that it is also currently receiving a good signal; a value of X means that the signal has been received correctly in the local node but that the remote node indicates, by sending a Remote-Defect-Indication (RDI), that it is not receiving a good signal from the local node; a value of SF is an acronym for Signal-Failure, and means that the local node has not received a signal, and thus does not receive an indication from the remote node, and the local node does not know the status of the remote node.

In the present example, the local node decides what indications to send to the remote node, and on which path, based, at least in part, on received status signal indications.

A local node optionally has the following options: the local node may transmit PDH traffic on a path with a V indication, a path along which the local node has received data correctly; the local node may transmit PDH traffic on a path with an X indication, a path along which the local node has NOT received traffic correctly; and the local node may refrain from transmitting traffic on a path - and a receiver at the remote node will interpret not receiving traffic as an indication of SF.

Table 1 below lists what a local node optionally transmits on the primary and the secondary paths as a response to received indications from the paths, according to an embodiment of the invention. It is noted that when Table 1 indicates that the local node should transmit an SF indication - the actual interpretation may optionally be - don't send traffic. The remote receiver will interpret not receiving traffic as an SF indication.

**Table 1**

| Index | RX | | TX | |
|---|---|---|---|---|
| | Primary | Secondary | Primary | Secondary |
| 1 | V | V | V | SF |
| 2 | V | X | V | SF |
| 3 | V | SF | V | SF |
| 4 | X | V | V | V |
| 5 | X | X | V | V |
| 6 | X | SF | V | X |
| 7 | SF | V | X | V |
| 8 | SF | X | X | V |
| 9 | SF | SF | X | X |

Table 1 includes the following columns: an index column, in order to simplify reference in this document; two input columns for indicating a status value received (RX) via a primary path and received via a secondary path; and two output columns for indicating a status value to be optionally sent (TX) via the primary path and the secondary path.

Table 1 is now explained with a few examples of how a local node uses the table in order to make decisions how to transmit data.

The row indexed 1 indicates that both the primary signal and secondary signal are received correctly at both ends of the ring. Therefore, the local node transmitter should transmit the PDH signals only on the primary path and report SF on the secondary path, as if a signal has not been received at the local node via the secondary path.

When a remote node receives the indications, as shown in row 3 of Table 1, the remote node optionally responds by sending a PDH signal and a V indication on the primary path, and stops sending traffic on the secondary path.

The system has reached a steady state in which both nodes use only the primary path.

Table 1 defines a logic such that, given a set of received signals, defines which signals are optionally to be sent. Table 1 leads to a steady state both in a case where there is no path failure, and when there is a path failure, and does not lead to deadlock.

In another example embodiment of the invention, every node stores information on each of the PDH signals which passes through the node. The information includes a path of the PDH signal, which is defined, at least in part, by an ingress node and an egress node to the path; and a status of the path.

If an intermediate node is not being used to transport a PDH signal, since an ingress node has decided not to send data in a particular path, the intermediate node senses that some bandwidth is free, and optionally uses that bandwidth to send additional data, optionally using a logic such as depicted and explained with reference to Figure 5.

Information about each PDH signal is optionally distributed by all nodes in the network including the egress node. The information optionally includes an indication whether a signal is being properly received, and if there are errors in the received signal, and/or an error rate in the received signal.

The second example embodiment of the invention optionally refrains from using an RDI signal, and optionally does not use the same Decision-Making-Logic as the first example embodiment of the invention. However, the second implementation optionally uses a protocol for distributing the status messages.

Yet another example embodiment of the invention optionally does not use dynamic bandwidth allocation. If the presently described example embodiment of the invention discovers that a PDH signal, such as an E1 signal, is redundant and can be dropped, the example embodiment of the invention maps Ethernet packets into the E1 frame. The E1 signal continues to flow, but the data the E1 signal contains is optionally modified. The E1 signal is used to carry Ethernet packets packed as data into the E1 signal.

Some advantages and disadvantages of the above-mentioned methods are now described.

Several alternative methods were presented as to how indications of path integrity, and/or path stability, and/or path health, are communicated.

A first alternative was to transport the indications in a separate, signaling, communication channel. A disadvantage of the first alternative is that a data channel may be affected while the signaling channel is not. An advantage of the first alternative is that the data is not affected by existence of the signaling channel.

A second alternative was to transport the indications together with the data. A disadvantage of the second alternative is that if the data channel is affected, the signaling channel is also affected. It is noted that Table 1 above deals with the above disadvantage by treating not receiving an indication of path integrity as a failure of the path. An advantage of the second alternative is that a special signaling channel does not have to be allocated, making for a simpler allocation.

A third alternative was to infer a status of a path from data carried over the path. An advantage of the third alternative is that no extra indications are required for signaling. A disadvantage of the third alternative is that in some cases the inferring may be more complex. The complexity of the inferring can depend on a type of data being sent. Not all data may be suitable for easy inferring, for example unframed E1 data does lend itself to easy inferring. The complexity of the inferring can also depend on whether an error rate is being measured by a node. A result of the measurement of the error rate can optionally be used for inferring health, or integrity, of a communication path.

Several alternative methods were presented as to which nodes, if any, carry out signaling of path health and detection of path health.

A first alternative was that only end-points, that is, ingress nodes and egress nodes of a protected path, carry out sending signals of path integrity and decision of bandwidth allocation. An advantage of the first alternative is that implementing the first alternative is simple, and that the first alternative depends on end-to-end status of the information.

A second alternative was that all nodes participate in the sending signals indicating path integrity, based, at least in part, on information about each PDH signal being optionally distributed by all nodes in the network. The second alternative may be faster to detect and use freed up bandwidth than the first alternative, due to shorter propagation of between neighboring nodes, rather than along an entire path.

A third alternative included no dynamic bandwidth allocation, but a re-mapping of one type of signal on top of another, such as using an E1 signal to carry Ethernet packets as described above. The third alternative may be suitable for networks where dynamic bandwidth allocation bandwidth is not done, but where bandwidth is statically allocated between different types of signals, for example where different physical channels carry different types of signals.

The above-described methods for freeing up communication bandwidth and using it for sending other data are optionally implemented by different embodiments of the invention, some of which are described below.

Some embodiments involve software performing one or more of the above methods in a communication node.

Some embodiments involve installing firmware to perform one or more of the above methods in a communication node. By way of a non-limiting example, the firmware may be installed in a communication node at a manufacturing facility.

Some embodiments involve performing a firmware upgrade, to install firmware to perform one or more of the above methods in a communication node. By way of a non-limiting example, the firmware upgrade may be performed in a communication node at a manufacturing facility. By way of another non-limiting example, the firmware upgrade may be performed in an installed and possibly operational communication node in a communication network. In some embodiments, the firmware upgrade is sent along the communication network to the communication node.

Some embodiments involve a hardware unit added to a communication node to perform one or more of the above mentioned network management methods.

Some embodiments involve a hardware unit added externally to a communication node, which observes communications on the network, and blocks redundant data from being passed on the network, and adds other data.

Reference is now made to Figure 6A, which is a simplified block diagram illustration of a communication node 605, constructed and operating according to an example embodiment of the present invention.

Data 410, similar to the data 401 of Figure 4, enters the communication node 605. A management unit 505 manages which data is sent along a first path 430, and which data is sent along a second path 475. Similarly to the description of Figure 4, the management unit 505 sends PDH data, for example, along a single path, the first path 430, and Ethernet data, for example, along a second path 475. By virtue of refraining from sending PDH data along the second path 475, the second path 475 is available for sending more data, for example Ethernet data or even unprotected, non-redundant, PDH data.

The above-mentioned embodiment depicted by Figure 5 is typical of embodiments of the invention where the network management unit 505 is implemented by software in a communication node and/or by firmware in a communication node.

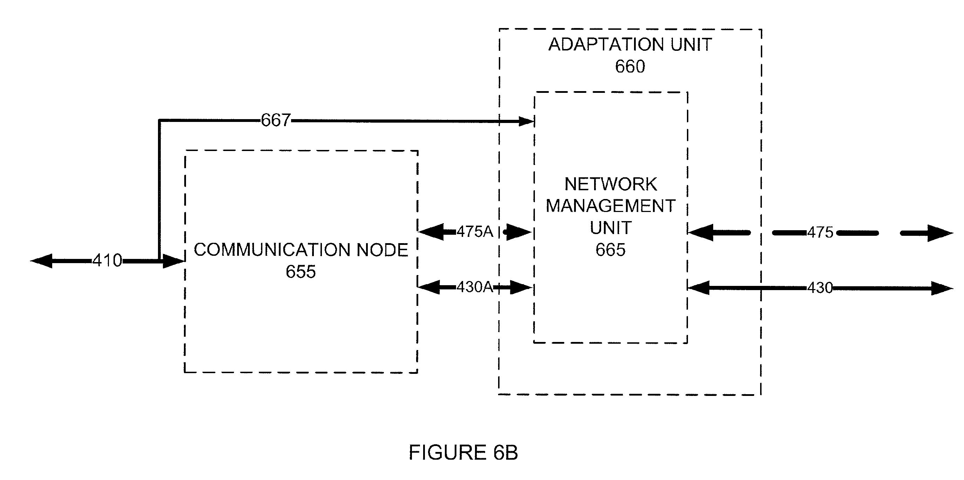

Reference is now made to Figure 6B, which is a simplified block diagram illustration of an adaptation unit 660 connected to, communicating with, and providing at least some network management service to, a communication node 655, constructed and operating according to an example embodiment of the present invention.

The adaptation unit 660 receives the same input data as the communication node 655, and alters the output of the communication node 655 so as to implement one or more of the methods described above as example embodiments of the present invention.

Data 410, similar to the data 410 of Figure 4, enters the communication node 655 and is also split via an additional path 667 to enter a network management unit 665.

The communication node 655 optionally sends data out along a first path 430A, and along a second path 475A, according to current protocols, that is, optionally sends redundant data, for example, redundant PDH data, along both the first path 430A, and along the second path 475A.

The network management unit 665 in the adaptation unit 660 reads the input data 410, and also reads output data sent out by the communication node 655. The network management unit 665 optionally analyzes the output data sent out by the communication node 655, and optionally refrains from sending identical data along the second path 475A, and replaces the identical data with additional data which was included in the input data 410.

The network management unit 665 in the adaptation unit 660 optionally sends data out along a first path 430, and along a second path 475, using freed up communication bandwidth according to the methods described above as example embodiments of the present invention.

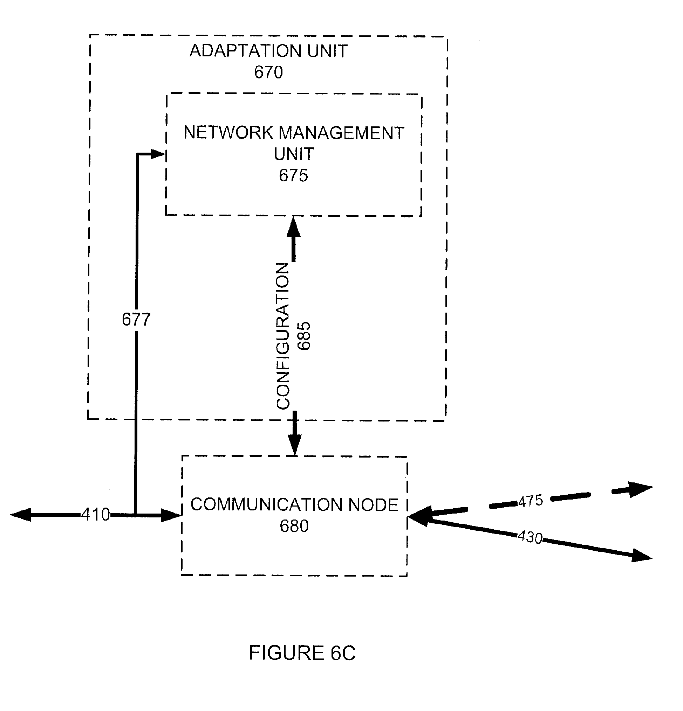

Reference is now made to Figure 6C, which is a simplified block diagram illustration of an adaptation unit 670 connected to, communicating with, and providing at least some network management service to, a communication node 680, constructed and operating according to an example embodiment of the present invention.

The adaptation unit 670 receives the same input data as the communication node 680, and optionally provides configuration instructions along a configuration connection 685 to the communication node 680, so as to implement one or more of the methods described above as example embodiments of the present invention.

In some embodiments of the invention, the adaptation unit 670 receives path integrity indications, as described above, from other communication nodes and/or from other adaptation units 670 in a network, optionally along the additional path 677, and/or the configuration connection 685.

Data 410, similar to the data 410 of Figure 4, enters the communication node 680 and is also optionally split via an additional path 677 to enter a network management unit 675.

The network management unit 675 in the adaptation unit 670 reads the input data 410 and optionally analyzes the data, deciding which data which is supposed to be sent out redundantly along two paths, may be sent out along just one path.

The network management unit 675 in the adaptation unit 670 optionally sends configuration instructions to the communication node 680, instructing the communication node 680 which data to send out along just one path, for example PDH data only along a first path 430, and also which additional data may be sent out along a second, freed up path, for example the second path 475.

It is expected that during the life of a patent maturing from this application many relevant communication path protection mechanisms will be developed and the scope of the term path protection is intended to include all such new technologies *a prior.*

The terms "comprising", "including", "having" and their conjugates mean "including but not limited to".

As used herein, the singular form "a", "an" and "the" include plural references unless the context clearly dictates otherwise. For example, the term "a unit" or "at least one unit" may include a plurality of units, including combinations thereof.

The words "example" and "exemplary" are used herein to mean "serving as an example, instance or illustration". Any embodiment described as an "example" or as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the broad scope of the appended claims.

## Claims

1. A method for managing traffic in a communication network which includes a protected path comprising a first path and a second path, comprising:
refraining from sending redundant data along the second path; and
using freed up communication capacity obtained by refraining from sending redundant data along the second path for sending other data along the second path.

2. The method of claim 1 in which the protected path is protected according to a Sub-Network Connection Protection protocol.

3. The method of claims 1 or 2 in which the sending other data comprises sending Ethernet data.

4. The method of claim 1, 2 or 3 in which the protected path comprises a protected Plesiochronous Digital Hierarchy (PDH) protocol data path.

5. The method of claim 1, 2, 3 or 4 and further comprising measuring path integrity, in which the refraining from sending and the using freed up communication capacity depend, at least partly, on meeting a stability criterion applied to the measured path integrity.

6. The method of claim 5 in which a network management unit maintains a data structure for tracking path integrity of at least the first path and the second path.

7. The method of claim 6 in which tracking the path integrity is performed based, at least in part, on health status indicators sent along a third path set up for communicating path integrity indicators for the first path, and a fourth path set up for communicating path integrity indicators for the second path.

8. The method of claim 6 in which tracking the path integrity is performed based, at least in part, on health status indicators sent along the first path and the second path.

9. The method of claim 6 in which tracking the path integrity is performed based, at least in part, on detecting errors in received data.

10. A communication node configured to provide path protection by sending redundant data along a first path and a second path, comprising a network management unit configured to:
refrain from sending redundant data along the second path; and
use freed up communication capacity obtained by refraining from sending redundant data along the second path for sending other data along the second path.

11. A network management unit configured to functionally connect to a communication node configured to provide path protection by sending redundant data along a first path and a second path, configured to:
cause the communication node to refrain from sending redundant data along the second path and to use freed up communication capacity, obtained by causing the communication node to refrain from sending redundant data along the second path, for sending other data along the second path.

12. A network management unit configured to functionally connect to a communication node configured to provide path protection by sending redundant data along a first path and a second path, configured to:
block the communication node from sending redundant data along the second path; and
use freed up communication capacity, obtained by blocking the communication node from sending redundant data along the second path, for sending other data along the second path.

13. Apparatus in a communication network comprising a network management unit which is configured to provide network traffic management using a method according to any one of claims 1-9.

14. A computer readable medium comprising program steps for implementing network traffic management according to any one of claims 1-9.
